# EUROPÄISCHE PATENTSCHRIFT

(11) **EP 2 878 858 B1**
(45) Veröffentlichungstag und Bekanntmachung des Hinweises auf die Patenterteilung: **27.03.2019**
(21) Anmeldenummer: 14187761.3
(22) Anmeldetag: 06.10.2014
(51) Int. Cl.: F16H 59/02, B60K 26/02, G05G 9/047

(54) **Bedienkonzept zum Fahren eines Selbstfahrers**
Operating concept for driving a self-propelled vehicle
Concept de commande destiné à commander un automoteur

(30) Priorität: 29.11.2013 DE 102013113216
(43) Veröffentlichungstag der Anmeldung: 03.06.2015
(73) Patentinhaber: CLAAS Selbstfahrende Erntemaschinen GmbH, 33428 Harsewinkel (DE)
(72) Erfinder: Kriebel, Bastian, 48155 Münster (DE); Fischer, Frédéric, 59823 Arnsberg (DE); Tepper, Andreas, 48231 Warendorf (DE)
(74) Vertreter: CLAAS Gruppe

(56) Entgegenhaltungen:
- EP-A1- 0 310 873
- EP-A1- 2 060 164
- WO-A1-02/46856
- DE-A1- 4 338 098
- DE-C1- 19 625 502

## Beschreibung

Die vorliegende Erfindung betrifft eine landwirtschaftliche Arbeitsmaschine mit einem Bedienelement zum Einstellen einer Geschwindigkeit der landwirtschaftlichen Arbeitsmaschine, sowie ein Verfahren zur Geschwindigkeitsregelung der landwirtschaftlichen Arbeitsmaschine.

Landwirtschaftliche Arbeitsmaschinen, wie Feldhäcksler, Mähdrescher oder Traktoren, weisen ein Antriebsaggregat zum Antreiben der landwirtschaftlichen Arbeitsmaschine auf, welches unter anderem die zur Fortbewegung der landwirtschaftlichen Arbeitsmaschine benötigte Energie liefert. Moderne landwirtschaftliche Arbeitsmaschinen weisen üblicherweise neben einem Fahrpedal ein Bedienelement zur manuellen Ansteuerung des Antriebsaggregates und Einstellung einer Geschwindigkeit der landwirtschaftlichen Arbeitsmaschine auf, wobei das Bedienelement ein Fahrhebel sein kann, welcher in Reichweite einer Hand des Bedieners angeordnet ist.

Eine Betätigungsvorrichtung zum Steuern eines Nutzfahrzeuges ist aus der EP 0 310 873 A1 (gemäß dem Oberbegriff der unabhängigen Ansprüche) bekannt, wobei ein als Schalthebel ausgeführtes Betätigungselement in einer Kulissenführung angeordnet ist und in zwei nebeneinander liegenden Kulissengängen betrieben werden kann. Den Kulissengängen sind dabei jeweils bestimmte Schaltmittel zugeordnet, über die entweder ein Lastschaltgetriebe oder ein stufenloses Getriebe ansteuerbar ist. Mittels einer Bewegung des Schalthebels in der dem stufenlosen Getriebe zugeordneten Schaltkulisse kann eine stufenlose Drehzahlverstellung an dem stufenlosen Getriebe bewirkt werden, wodurch der Bediener die Geschwindigkeit der Arbeitsmaschine einstellen kann. Eine Einstellung der Geschwindigkeit erfolgt üblicherweise über eine Änderung der Beschleunigung der Arbeitsmaschine, die von dem Bediener mittels des Bedienelementes gesteuert werden kann. Das genaue Einstellen einer bestimmten Geschwindigkeit, insbesondere beim Rangieren, ist jedoch insbesondere für ungeübte Bediener schwierig. Zudem erfordert das sichere Rangieren, beispielsweise zur Ankoppelung eines Vorsatzgerätes welches ein sehr präzises Fahren der Arbeitsmaschine erfordert, viel Erfahrung.

Aus der WO 02/46856 A1 ist ein Radlader bekannt, der mittels eines Joysticks lenkbar ist und dessen Fahrgeschwindigkeit mittels des Joysticks veränderbar ist.

Es ist daher die Aufgabe der Erfindung, eine landwirtschaftliche Arbeitsmaschine bereitzustellen, die eine vereinfachte und präzisere Einstellung der Geschwindigkeit einer landwirtschaftlichen Arbeitsmaschine ermöglicht.

Die Aufgabe wird gelöst, indem bei einer landwirtschaftlichen Arbeitsmaschine mit einem Antriebsaggregat zum Antreiben der landwirtschaftlichen Arbeitsmaschine, und einem in einer Schaltkulisse auslenkbar angeordneten Bedienelement zum Ansteuern des Antriebsaggregates und zum Einstellen einer Geschwindigkeit der landwirtschaftlichen Arbeitsmaschine, wobei die Geschwindigkeit der landwirtschaftlichen Arbeitsmaschine mittels des Bedienelementes wahlweise schaltbar in einem beschleunigungsproportionalen ersten Modus und in einem wegproportionalen zweiten Modus einstellbar ist. Vorteilhaft dabei ist, dass mit demselben Bedienelement sowohl der beschleunigungsproportionale erste Modus als auch der wegproportionale zweite Modus bedient werden, wodurch der Bediener je nach Bedarf zwischen dem ersten und zweiten Modus umschalten und so den für die anstehende Aufgabe geeigneteren Modus auswählen kann. Dies ermöglicht es dem Bediener, beispielsweise beim Ankoppeln eines Vorsatzgerätes, den zweiten Modus zu wählen und die Geschwindigkeit der Arbeitsmaschine proportional zur Auslenkung des Bedienelementes einzustellen, wobei insbesondere auch ein ungeübter Bediener zuverlässig mit abnehmendem Abstand zu dem Vorsatzgerät die Geschwindigkeit präzise reduzieren kann, um schließlich ohne Kollision an dem Vorsatzgerät zum Ankoppeln zum Stillstand zu gelangen. In dem beschleunigungsproportionalen ersten Modus ist die Größe der Beschleunigung der landwirtschaftlichen Arbeitsmaschine eine Funktion der Größe der Auslenkung des Bedienelementes, des Auslenkwinkels. Der beschleunigungsproportionale erste Modus ist bei der Ernte vorteilhaft, wo eine Geschwindigkeit einmalig eingestellt und für einen längeren Zeitraum gehalten werden soll.

Zur Führung des Bedienelementes weist die Schaltkulisse vorzugsweise eine Hauptbahn auf. Zudem ist ein Umschaltelement zum Umschalten zwischen dem ersten Modus und dem zweiten Modus vorgesehen, welches zum Wechseln zwischen dem ersten und dem zweiten Modus durch den Bediener betätigt werden muss, um ein unbeabsichtigtes Umschalten zu vermeiden.

In einer weiteren bevorzugten Ausgestaltungsform der Erfindung weist die Schaltkulisse eine Hauptbahn und eine mit dieser verbundene Zusatzbahn zur Führung des Bedienelements auf, wobei der Hauptbahn und der Zusatzbahn unterschiedliche Modi zur Einstellung der Geschwindigkeit zugeordnet sind. Dadurch, dass die Haupt- und Zusatzbahn der Schaltkulisse miteinander verbunden sind, kann der Bediener das Bedienelement von eine Bahn in die andere bewegen, um so zügig zwischen den Modi wechseln zu können. Durch die Verbindung der beiden Bahnen wird das Bedienelement zum Umschalten zwangsweise in eine definierte Position geführt, in der ein Umschalten möglich ist.

Die Hauptbahn und/oder die Zusatzbahn weist mindestens einen Bereich für Vorwärtsfahrt, Rückwärtsfahrt sowie einen diese Bereiche verbindenden neutralen Bereich auf.

Ein Umschalten zwischen dem ersten Modus und dem zweiten Modus ist dabei in dem neutralen Bereich durchführbar, wodurch Schäden an dem Getriebe der Arbeitsmaschine vermieden werden können. In dem neutralen Bereich oder einem Schnellstopp- oder Anhaltebereich können auch die Haupt- und Zusatzbahn miteinander verbunden sein, da hier ein problemloses Umschalten zwischen den Modi gewährleistet sein kann. Ein Umschalten zwischen dem ersten und dem zweiten Modus kann auch außerhalb des neutralen Bereiches durchführbar sein, beispielsweise unterhalb einer Grenzgeschwindigkeit.

In einer besonders bevorzugten Ausgestaltung der Erfindung weist die Hauptbahn und/oder die Zusatzbahn mindestens einen Bereich auf in dem eine Boostfunktion aktivierbar ist. Unter einer Boostfunktion ist hierbei eine überproportionale Erhöhung der Beschleunigung und/oder der Geschwindigkeit, beispielsweise auf einen Maximalwert, zu verstehen.

In einer weiterhin bevorzugten Ausgestaltung der Erfindung ist ein Umschaltelement an dem Bedienelement oder beabstandet zu diesem angeordnet. Ein an dem Bedienelement angeordnetes Umschaltelement ermöglicht ein zügiges und unkompliziertes Umschalten zwischen dem ersten und zweiten Modus. Das Umschaltelement kann auch beabstandet zu dem Bedienelement, beispielsweise an einer Bedienkonsole innerhalb einer Fahrerkabine, angeordnet sein. Dies hat den Vorteil, dass ein unbeabsichtigtes Umschalten zwischen den Modi erschwert und so die Sicherheit vor einer Fehlbedienung erhöht werden kann. Ebenso kann das Umschaltelement mit einem bereits bestehendem Betätigungselement durch eine Mehrfachbelegung kombiniert werden.

Durch einen Anfahrtaster, der an dem Bedienelement angeordnet ist, kann die Bedienung der landwirtschaftlichen Arbeitsmaschine weiter verbessert werden. Ein solcher Anfahrtaster erhöht weiterhin die Sicherheit, da durch diesen ein unbeabsichtigtes Anfahren verhindert werden kann. Zudem kann eine Tempomatfunktion vorgesehen sein, durch welche die Geschwindigkeit der landwirtschaftlichen Arbeitsmaschine konstant gehalten werden kann, wodurch der Bediener sich beispielsweise auf den Ernteprozess konzentrieren kann. Die Tempomatfunktion kann dabei in dem ersten und/oder zweiten Modus aktiviert und/oder geregelt werden. Auch die Aktivierung weiterer Automatiken, wie beispielsweise einem Vorfahrtregler, ist durch eine bestimmte Bewegung des Bedienhebels in einen definierten Bereich möglich.

In dem beschleunigungsproportionalen ersten Modus ist die Größe der Beschleunigung der landwirtschaftlichen Arbeitsmaschine eine Funktion der Größe der Auslenkung des Bedienelementes, dem Auslenkwinkel. In dem wegproportionalen zweiten Modus hingegen ist die Größe der Geschwindigkeit der landwirtschaftlichen Arbeitsmaschine eine Funktion der Größe der Auslenkung des Bedienelementes, dem Auslenkwinkel.

Weiterhin betrifft die Erfindung ein Verfahren zur Geschwindigkeitsregelung für eine landwirtschaftliche Arbeitsmaschine mit einem Antriebsaggregat und einem auslenkbar angeordneten Bedienelement, wobei die Geschwindigkeit der landwirtschaftlichen Arbeitsmaschine wahlweise schaltbar in einem beschleunigungsproportionalen ersten Modus und in einem wegproportionalen zweiten Modus eingestellt wird. Vorteilhaft ist, dass durch das Umschalten zwischen dem ersten Modus und dem zweiten Modus der Bediener die für die anstehende Arbeit geeignetere Geschwindigkeitsregelung auswählen kann. So kann beispielsweise ein ungeübter Bediener zum Ankoppeln eines Vorsatzgerätes den zweiten Modus auswählen, in dem die Geschwindigkeit der Arbeitsmaschine proportional zur Auslenkung des Bedienelementes eingestellt wird. Dadurch kann der Bediener zuverlässig und sicher mit abnehmender Geschwindigkeit an das Vorsatzgerät heranfahren und ohne Kollision an dem Vorsatzgerät in einer Ankoppelposition zum Stillstand kommen.

Weitere Merkmale und Vorteile der Erfindung ergeben sich aus der nachfolgenden Beschreibung von Ausführungsbeispielen unter Bezugnahme auf die beigefügten Figuren.

Es zeigen:
- Fig. 1:: eine schematische Ansicht eines Feldhäckslers als Beispiel einer erfindungsgemäßen landwirtschaftlichen Arbeitsmaschine;
- Fig. 2:: eine Ansicht einer Bedienkonsole mit einem Bedienelement welches in einer Schaltkulisse geführt wird;
- Fig. 3:: eine Schaltkulisse mit einer Hauptbahn zur Führung des Bedienelementes; und
- Fig. 4:: eine Schaltkulisse mit einer Hauptbahn und einer Zusatzbahn.

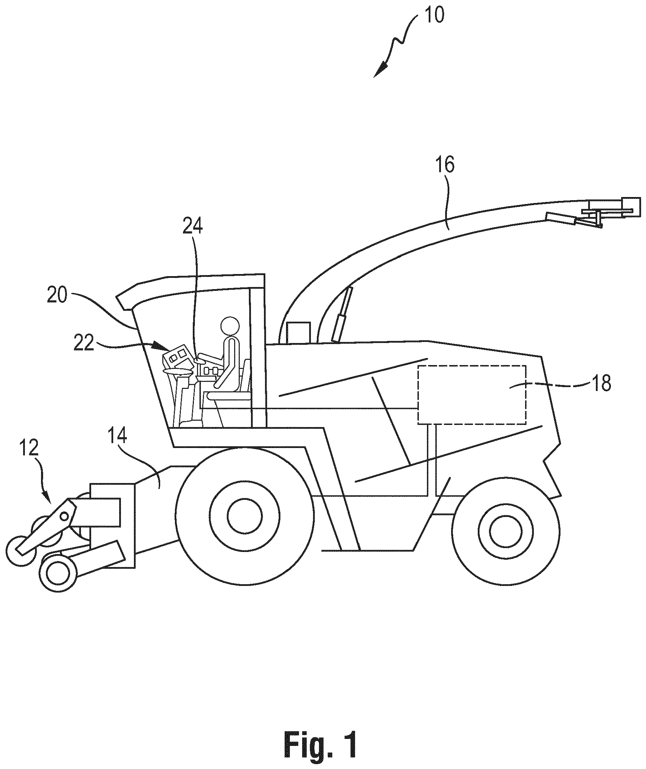

Als Beispiel einer erfindungsgemäßen landwirtschaftlichen Arbeitsmaschine 10 ist in Fig. 1 ein Feldhäcksler dargestellt. Der gezeigte Feldhäcksler ist dem Fachmann in seinen Grundzügen vertraut, so dass von einer Beschreibung seiner üblichen Baugruppen wie Vorsatzgerät 12, Einzugsaggregat 14, Häckselwerk und Überladekrümmer 16 weitgehend abgesehen werden kann. Das Vorsatzgerät 12 ist dabei abnehmbar und kann zum Transport auf einer öffentlichen Straße auf einen Anhänger verladen werden. Zudem kann je nach zu erntendem Gut ein entsprechendes Vorsatzgerät ausgewählt und montiert werden. Der Feldhäcksler wird von einem Antriebsaggregat 18 angetrieben, wobei das Arbeitsaggregat 18 auch die zum Betrieb der Baugruppen benötigte Energie liefern kann.

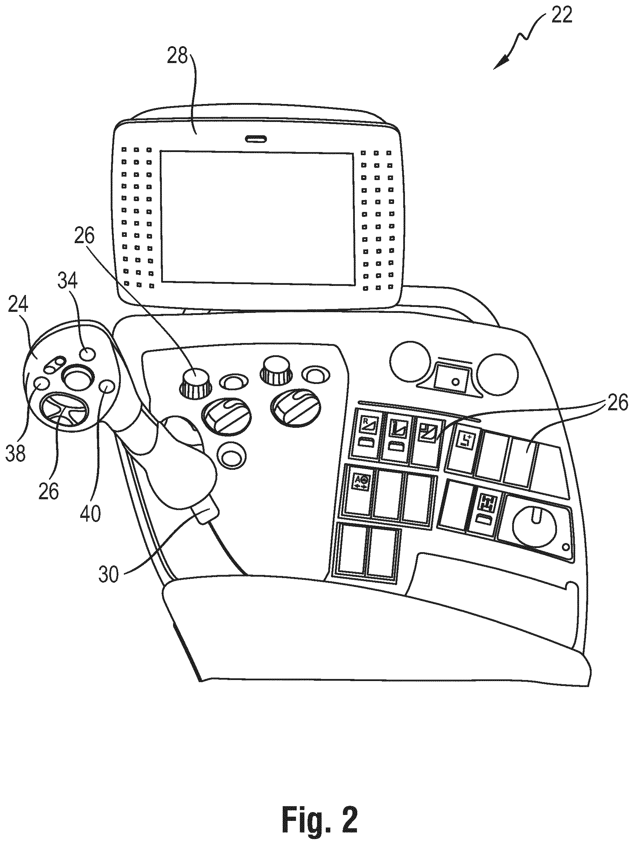

Zum Steuern unterschiedlicher Funktionen der landwirtschaftlichen Arbeitsmaschine 10, insbesondere des Antriebsaggregates 18 und der Geschwindigkeit der landwirtschaftlichen Arbeitsmaschine 10, sind in einer Fahrerkabine 20 eine Bedienkonsole 22 und ein Bedienelement 24 angeordnet, die in Fig. 2 dargestellt sind. Die Bedienkonsole 22 weist dabei eine Mehrzahl von Eingabeelementen 26, beispielsweise Taster oder Schalter, zur Steuerung unterschiedlicher Funktionen der landwirtschaftlichen Arbeitsmaschine 10 auf. Über eine Anzeigevorrichtung 28 können Informationen über den aktuellen Zustand der landwirtschaftlichen Arbeitsmaschine 10 angezeigt werden. Bei einer Anzeigevorrichtung 28 in Form eines Touchscreen-Bildschirmes ist neben einer Anzeige auch eine Interaktion mit den angezeigten Informationen, beispielsweise zur Steuerung einer Baugruppe, möglich. Das Bedienelement 24 ist in Form eines Multifunktionsgriffes ausgebildet, welcher mehrere Eingabeelemente 26 aufweist, die von dem Bediener betätigt werden können ohne die Hand von dem Bedienelement 24 nehmen zu müssen.

Das Bedienelement 24 ist zum Steuern der Fortbewegung der landwirtschaftlichen Arbeitsmaschine 10 relativ zu der Bedienkonsole 22 verstellbar. Das Bedienelement 24 kann dabei mindestens einen Freiheitsgrad zum Steuern einer Vorwärts- und Rückwärtsbewegung sowie zum Einstellen der Geschwindigkeit der landwirtschaftlichen Arbeitsmaschine 10 aufweisen. Zusätzlich kann für das Bedienelement ein weiterer Freiheitsgrad zur Lenkung der landwirtschaftlichen Arbeitsmaschine 10 vorgesehen sein. Die Bedienkonsole 22 und das Bedienelement 24 sind in Fig. 2 aus der Sicht des Bedieners mit Blickrichtung nach vorne zur Vorderseite der landwirtschaftlichen Arbeitsmaschine 10 dargestellt. Durch eine Auslenkung des Bedienelementes 24 nach vorne, weg von dem Bediener, in Richtung der Vorderseite der landwirtschaftlichen Arbeitsmaschine 10 wird eine Vorwärtsbewegung der Arbeitsmaschine 10 und durch eine entgegengesetzte Bewegung des Bedienelementes 24 eine Verzögerung oder eine Rückwärtsbewegung der Arbeitsmaschine 10 bewirkt.

Die im Folgenden genauer beschriebene Einstellung der Geschwindigkeit der Arbeitsmaschine 10 ist nicht nur für einen Feldhäcksler sondern auch für beliebige andere landwirtschaftliche Arbeitsmaschinen wie etwa einen Mähdrescher oder einen Traktor einsetzbar. Besonders vorteilhaft sind landwirtschaftliche Arbeitsmaschinen mit einem stufenlosen Getriebe mit dem erfindungsgemäßen Bedienelement 24 und dem Einstellen der Geschwindigkeit steuerbar, wobei zur Einstellung der Geschwindigkeit insbesondere ein stufenloses Getriebe über das Bedienelement 24 ansteuerbar sein kann.

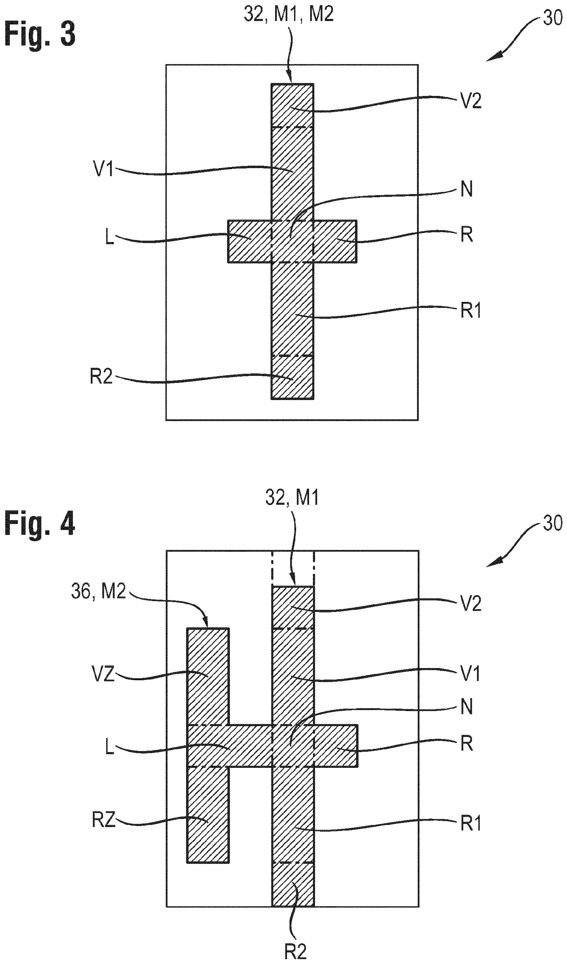

Das Bedienelement 24 ist in einer Schaltkulisse 30 geführt, wobei die Schaltkulisse 30 (Fig. 3) mindestens eine Hauptbahn 32 zur Führung des Bedienelementes 24 aufweist. Zur Einstellung der Geschwindigkeit der landwirtschaftlichen Arbeitsmaschine 10 ermöglicht die Hauptbahn 32 der Schaltkulisse 30 eine Auslenkung des Bedienelementes 24 im Wesentlichen entlang einer geraden Bahn. Die Geschwindigkeit der Arbeitsmaschine 10 wird dabei durch die Auslenkung des Bedienelementes 24 um einen Auslenkwinkel eingestellt, d.h. kontrolliert und reguliert, wobei die Geschwindigkeit der Arbeitsmaschine 10 von dem eingestellten Auslenkwinkel abhängig ist.

Die Einstellung der Geschwindigkeit der Arbeitsmaschine 10 kann der Bediener wahlweise in einem ersten Modus M1 oder in einem zweiten Modus M2 vornehmen, wobei der erste und der zweite Modus M1, M2 alternativ schaltbar sind. In dem ersten Modus M1 erfolgt die Einstellung der Geschwindigkeit beschleunigungsproportional, wobei die Größe der Beschleunigung der Arbeitsmaschine 10 abhängig von der Auslenkung des Bedienelementes 24, also dem Auslenkwinkel, einstellbar ist. In dem zweiten Modus M2 erfolgt die Einstellung der Geschwindigkeit wegproportional, wobei die Größe der Geschwindigkeit der Arbeitsmaschine 10 abhängig von der Größe der Auslenkung des Bedienelementes 24, dem Auslenkwinkel, einstellbar ist. Dies hat den Vorteil, dass der Bediener je nach anfallender Arbeitsaufgabe einen geeigneten Modus M1, M2 auswählen kann. So kann beispielsweise der beschleunigungsproportionale erste Modus M1 bei der Ernte vorteilhaft sein, wo eine Geschwindigkeit einmalig eingestellt und für einen längeren Zeitraum gehalten werden soll. Der wegproportionale zweite Modus M2 hingegen kann beim Rangieren oder Aufnehmen und Montieren des Vorsatzgerätes 12 von Vorteil sein, da hier die Geschwindigkeit der Arbeitsmaschine 10 sehr genau und intuitiv, insbesondere bei niedrigen Geschwindigkeiten, einstellbar und veränderbar ist und so ein punktgenaues, kollisionsfreies Heranfahren, beispielsweise an ein aufzunehmendes Vorsatzgerät 12, ermöglicht.

Um entsprechend der Auslenkung des Bedienelementes 24 die Geschwindigkeit einstellen zu können, weist die in Fig. 3 dargestellte Schaltkulisse 30 entlang der Hauptbahn 32 mehrere Bereiche auf, in die das Bedienelement 24 durch Auslenken verbringbar ist, und denen unterschiedlichen Funktionen zugeordnet sind. Die Grenzen zwischen den Bereichen können durch Druckpunkte für den Bediener haptisch wahrnehmbar gemacht werden, wobei das Überschreiten des Druckpunktes mit dem Bedienelement 24 einen höheren Kraftaufwand benötigt als das normale Auslenken des Bedienelementes. Die Grenzen zwischen den jeweiligen Bereichen sind als gestrichelte Linien in den Kulisse dargestellt. Der Bereich in dem ein für den Bediener bei einem Auslenken des Bedienelementes 24 spürbarer Druckpunkt angeordnet ist, wird ebenfalls jeweils durch eine gestrichelten Linie dargestellt. An einen mittig angeordneten neutralen Bereich N ist in Fahrtrichtung vorwärts ein erster Vorwärtsfahrbereich V1 und an diesen ein zweiter Vorwärtsfahrbereich V2 angeschlossen. In Fahrtrichtung rückwärts ist an den neutralen Bereich N ein erster Rückwärtsfahrbereich R1 und an diesen ein zweiter Rückwärtsfahrbereich R2 angeschlossen. Seitlich neben dem neutralen Bereich N sind einander gegenüberliegend ein rechter Funktionsbereich R und ein linker Funktionsbereich L angeordnet. Wahlweise kann die Belegung auch derart ausgestaltet sein, dass die Autostopp und/oder Reversierfunktion dem linken Funktionsbereich L zugeordnet sein kann und durch eine zusätzliche Bedingung, zum Beispiel der Betätigung des Tasters 38 oder Anfahrtaster 40, zwischen beiden Funktionen umgeschaltet werden kann.

In dem beschleunigungsproportionalen ersten Modus M1 bewirkt ein in dem neutralen Bereich N in einer Nullstellung angeordnetes, also im Wesentlichen nicht ausgelenktes, Bedienelement 24 keine Änderung der aktuellen Geschwindigkeit der Arbeitsmaschine 10, insbesondere wenn keine der den Bereichen L oder R zugeordneten Funktionen aktiviert ist. Dies bedeutet, dass die Arbeitsmaschine 10 stillstehen oder sich mit einer bereits erreichten Geschwindigkeit im Wesentlichen konstant fortbewegen kann. Zum Anfahren in Fahrtrichtung vorwärts beispielsweise wird das Bedienelement 24 aus dem neutralen Bereich N heraus in den ersten Vorwärtsfahrbereich V1 ausgelenkt. Zusätzlich kann es erforderlich sein, dass der Taster 38 oder Anfahrtaster 40 betätigt sein muss. Diese Auslenkung des Bedienelementes 24 entspricht einem vordefinierten Wert der Beschleunigung in die gewählte Richtung und bewirkt, bei unveränderter Auslenkung des Bedienelementes 24, eine konstante Beschleunigung der Arbeitsmaschine 10. Bei Erreichen der gewünschten Geschwindigkeit kann das Bedienelement 24 wieder in seine Ausgangslage in der Nullstellung in den neutralen Bereich N verbracht werden. Zum Reduzieren der Geschwindigkeit, auch bis zum Stillstand der Arbeitsmaschine 10, wird das Bedienelement 24 in die entgegengesetzte Richtung, nach Rückwärts, in den ersten Rückwärtsfahrbereich R1 ausgelenkt. Dies bewirkt eine Verzögerung der Arbeitsmaschine 10 mit einem von der Auslenkung des Bedienelementes 24 abhängigen Wert. Die Änderung der Beschleunigung kann innerhalb des ersten Vorwärts- und ersten Rückwärtsfahrbereiches V1, R1 im Wesentlichen proportional oder exponentiell zu der Auslenkung des Bedienelementes 24 erfolgen. Eine Auslenkung des Bedienelementes 24 in den zweiten Vorwärts- oder den zweiten Rückwärtsfahrbereich V2, R2 bewirkt eine Erhöhung der Beschleunigung in der jeweiligen Richtung auf einen Maximalwert, wodurch eine sogenannte Boostfunktion realisiert werden kann, bei der die maximal verfügbare Leistung des Arbeitsaggregates 18 oder anderer Baugruppen bereitgestellt werden kann. Das Bedienelement 24 kann eine Rückstellvorrichtung aufweisen, die das Bedienelement 24 nach einem Auslenken aus der Nullstellung selbstständig in die Nullstellung oder zumindest den neutralen Bereich N zurückbewegt. Zwischen den Bereichen N, V1, V2, R1, R2, L, R können Druckpunkte angeordnet sein, die für den Bediener einen Übergang des Bedienelementes 24 von einem Bereich in einen anderen Bereichen N, V1, V2, R1, R2, L, R kenntlich machen können. Dabei kann bei einem Wechsel des Bedienelementes 24 von einem Bereich N, V1, V2, R1, R2, L, R in einen anderen Bereich N, V1, V2, R1, R2, L, R eine für den Bediener spürbare Kraft bei der Bewegung des Bedienelementes 24 zu überwinden sein.

Wird das Bedienelement 24 aus dem neutralen Bereich N seitlich in einen Funktionsbereich L,R, insbesondere den linken Funktionsbereich L, ausgelenkt, beispielsweise bei zeitgleicher Betätigung eines Tasters 38, so bewirkt dies eine Richtungsumkehr der Arbeitsmaschine 10, wobei eine fahrende Arbeitsmaschine 10 selbstständig abbremsen und in die entgegengesetzte Richtung wieder auf die vor dem Aktivieren der Reversierfunktion gefahrenen Geschwindigkeit, beispielsweise multipliziert mit einem Faktor, beschleunigen kann. Ein Auslenken des Bedienelementes 24 aus dem neutralen Bereich N in den linken Funktionsbereich L ohne gleichzeitiges Betätigen des Tasters 38 bewirkt, beispielsweise in einem Notfall, ein schnellstmögliches, automatisches Stoppen der Arbeitsmaschine 10 und/oder des Antriebaggregates 18, wodurch mit nur einer Bedienaktion die Arbeitsmaschine 10 sicher zum Stillstand gebracht werden kann.

Ein Umschalten von dem beschleunigungsproportionalen ersten Modus M1 in den wegproportionalen zweiten Modus M2, oder andersherum, kann bei einem Stillstand der Arbeitsmaschine 10 erfolgen. Zum Umschalten zwischen den Modi M1, M2 kann der Bediener bei der in Fig. 3 gezeigten Schaltkulisse 30 mit nur einer Hauptbahn 32 beim Stillstand der Arbeitsmaschine 10 ein Umschaltelement 34 betätigen. Das Umschaltelement 34 kann an dem Bedienelement 24 oder beabstandet dazu an der Bedienkonsole 22 angeordnet sein. Zusätzlich zur Betätigung des Umschaltelementes 34 kann es erforderlich sein, das Bedienelement 24 in den linken Funktionsbereich L auszulenken, wodurch ein Umschalten erst bei einem Stillstand der Arbeitsmaschine 10 sichergestellt werden kann. Ein Umschalten zwischen dem ersten und dem zweiten Modus M1, M2 kann auch dann erfolgen, wenn eine bestimmte vordefinierte Grenzgeschwindigkeit nicht überschritten ist.

In dem wegproportionalen zweiten Modus M2 erfolgt die Wahl der Fahrtrichtung und die Einstellung der Geschwindigkeit ebenfalls über die Auslenkung des Bedienelementes 24 in die bereits oben genannten und beschriebenen Bereiche der Hauptbahn 32 der Schaltkulisse 30. Hierbei ist jedoch die Geschwindigkeit, insbesondere in den ersten Vorwärts- oder Rückwärtsfahrbereichen V1, R1, proportional oder exponentiell zu der Auslenkung des Bedienelementes 24. Dies bedeutet, dass eine bestimmte Auslenkung einer bestimmten Geschwindigkeit entspricht, wobei die Arbeitsmaschine 10 bei einem in dem neutralen Bereich N angeordneten Bedienelement 24 stillsteht. Eine Auslenkung in den zweiten Vorwärts- oder Rückwärtsfahrbereich V2, R2 bewirkt, dass die, insbesondere zuvor für den jeweiligen Fahrzustand definierte, Höchstgeschwindigkeit der Arbeitsmaschine 10 in die gewählte Fahrtrichtung eingestellt wird.

In Fig. 4 ist eine weitere Ausführungsform der Schaltkulisse 30 dargestellt, die zusätzlich zu der Hauptbahn 32 eine mit dieser verbundene Zusatzbahn 36 zur Führung desselben Bedienelementes 24 aufweist. Die Hauptbahn 32 und die Zusatzbahn 36 sind im Wesentlichen parallel zueinander angeordnet. Die Zusatzbahn 36 weist einen zusätzlichen Vorwärtsfahrbereich VZ und einen zusätzlichen Rückwärtsfahrbereich RZ auf, die jeweils an den mittig angeordneten linken Funktionsbereich L der Hauptbahn 32 anschließen. Der linke Funktionsbereich L erstreckt sich dabei seitlich weiter als bei der in Fig. 3 gezeigten Schaltkulisse 30 mit nur der Hauptbahn 32.

Die Besonderheit bei dieser Anordnung der Hauptbahn 32 und Zusatzbahn 36 ist, dass der Hauptbahn 32 und der Zusatzbahn 36 jeweils einer der beiden Modi M1, M2 zum Einstellen der Geschwindigkeit zugeordnet ist. So kann beispielsweise der Hauptbahn 32 der beschleunigungsproportionale erste Modus M1 und der Zusatzbahn 36 der wegproportionale zweite Modus M2, oder umgekehrt, zugeordnet sein. Die Einstellung der Geschwindigkeit in dem zusätzlichen Vorwärts- und Rückwärtsfahrbereich VZ, RZ erfolgt, je nach zugeordnetem Modus M1, M2, genauso proportional oder exponentiell wie in dem ersten Vorwärts- und Rückwärtsfahrbereich V1, R1. Das Umschalten zwischen dem ersten Modus M1 und dem zweiten Modus M2 erfolgt durch einen Wechsel der Bahnen 32,36 mit dem Bedienelement 24. Ist beispielsweise der Hauptbahn 32 der erste Modus M1 und der Zusatzbahn 36 der zweite Modus M2 zugeordnet, so kann durch ein seitliches Auslenken des Bedienelementes 24 aus dem neutralen Bereich N der Hauptbahn 32 in den linken Funktionsbereich L der Zusatzbahn 36 in den wegproportionalen zweiten Modus M2 umgeschaltet werden. Durch Auslenken in den zusätzlichen Vorwärts- oder Rückwärtsfahrbereich VZ, RZ kann dann die Geschwindigkeit der Arbeitsmaschine 10 wegproportional eingestellt werden, beispielsweise zum Rangieren. Der linke Funktionsbereich L kann der Hauptbahn 32 und der Zusatzbahn 36 zugeordnet sein, wobei insbesondere der zwischen dem zusätzlichen Vorwärts- und dem zusätzlichen Rückwärtsfahrbereich VZ, RZ angeordnete Teilbereich des linken Funktionsbereiches L der Zusatzbahn 36 zugeordnet sein kann, wobei in diesem Teilbereich ein Umschalten zwischen den Modi M1, M2 erfolgen kann. Als Sicherung gegen ein unbeabsichtigtes Umschalten kann zusätzlich zum Auslenken des Bedienelementes 24 das Drücken eines Tasters 38 erforderlich sein.

Die Arbeitsmaschine 10 kann zudem eine Tempomatfunktion aufweisen, bei der eine vorgegebene Geschwindigkeit automatisch gehalten wird. Diese Funktion kann Beispielsweise durch kurzes Antippen des Bedienelements 24 in den rechten Funktionsbereich R aktiviert werden. Durch ein längeres Halten des Bedienelementes 24 in dem rechten Funktionsbereich R kann die aktuelle Geschwindigkeit eingespeichert werden. Mittels des Bedienelementes 24 kann beispielsweise durch ein kurzes Auslenken in Form eines Antippens die eingestellte Sollgeschwindigkeit der Tempomatfunktion verändert werden. Beispielsweise kann ein Antippen in Fahrrichtung eine Erhöhung der Sollgeschwindigkeit um einen vorgegebenen Wert bewirken, während ein Antippen in rückwärtiger Richtung eine Verringerung der Sollgeschwindigkeit bewirken kann.

Unter einem Antippen des Bedienhebels 24 ist hierbei eine kurzzeitige Auslenkung des Bedienhebels 24 aus einer Ausgangsposition heraus und eine unmittelbar anschließende Rückkehr in die Ausgangsposition innerhalb einer definierten, insbesondere sehr kurzen, Zeitspanne zu verstehen. Durch Antippen des Bedienelementes 24, beispielsweise aus dem neutralen Bereich N in den ersten Vorwärtsfahrbereich V1 oder den ersten Rückwärtsfahrbereich R1 kann die aktuelle Geschwindigkeit der landwirtschaftlichen Arbeitsmaschine 10 um einen definierten Wert abgesenkt oder erhöht werden. Dies kann beispielsweise bei aktivierter Tempomatfunktion zur Erhöhung der Geschwindigkeit durch ein Antippen des Bedienelementes 24 aus dem neutralen Bereich N heraus in den ersten Vorwärtsfahrbereich V1 erfolgen.

Ein Antippen des Bedienelementes 24 in dem zweiten Vorwärtsfahrbereich V2 oder dem zweiten Rückwärtsfahrbereich R2, beispielsweise in dem wegproportionalen zweiten Modus M2, kann ebenfalls ein Absenken oder Erhöhen der Geschwindigkeit der landwirtschaftlichen Arbeitsmaschine 10 bewirken. Bei einem Antippen des Bedienelementes 24 in dem zweiten Vorwärtsfahrbereich V2 oder dem zweiten Rückwärtsfahrbereich R2 kann die Absenkung oder Erhöhung der Geschwindigkeit größer sein, als eine Absenkung oder Erhöhung in dem ersten Vorwärtsfahrbereich V1 oder dem ersten Rückwärtsfahrbereich R1.

### Bezugszeichenliste

- 10: landwirtschaftliche Arbeitsmaschine
- 12: Vorsatzgerät
- 14: Einzugsaggregat
- 16: Überladekrümmer
- 18: Antriebsaggregat
- 20: Fahrerkabine
- 22: Bedienkonsole
- 24: Bedienelement
- 26: Eingabeelement
- 28: Anzeigevorrichtung
- 30: Schaltkulisse
- 32: Hauptbahn
- 34: Umschaltelement
- 36: Zusatzbahn
- 38: Taster
- 40: Anfahrtaster

- M1: erster Modus
- M2: zweiter Modus

- N: neutraler Bereich
- V1: erster Vorwärtsfahrbereich
- V2: zweiter Vorwärtsfahrbereich
- R1: erster Rückwärtsfahrbereich
- R2: zweiter Rückwärtsfahrbereich
- R: rechter Funktionsbereich
- L: linker Funktionsbereich
- VZ: zusätzlicher Vorwärtsfahrbereich
- RZ: zusätzlicher Rückwärtsfahrbereich

## Patentansprüche

1. Landwirtschaftliche Arbeitsmaschine mit einem Antriebsaggregat (18) zum Antreiben der landwirtschaftlichen Arbeitsmaschine (10), und einem in einer Schaltkulisse (30) auslenkbar angeordneten Bedienelement (24) zum Ansteuern des Antriebsaggregates (18) und zum Einstellen einer Geschwindigkeit der landwirtschaftlichen Arbeitsmaschine (10), **dadurch gekennzeichnet, dass** die Geschwindigkeit der landwirtschaftlichen Arbeitsmaschine (10) mittels des Bedienelementes (24) wahlweise schaltbar in einem beschleunigungsproportionalen ersten Modus (M1) oder in einem wegproportionalen zweiten Modus (M2) einstellbar ist, wobei in dem beschleunigungsproportionalen ersten Modus (M1) die Größe der Beschleunigung der landwirtschaftlichen Arbeitsmaschine (10) eine Funktion der Auslenkung des Bedienelementes (24) ist und in dem wegproportionalen zweiten Modus (M2) die Größe der Geschwindigkeit der landwirtschaftlichen Arbeitsmaschine (10) eine Funktion der Auslenkung des Bedienelementes (24) ist.

2. Landwirtschaftliche Arbeitsmaschine nach Anspruch 1, **dadurch gekennzeichnet, dass** die Schaltkulisse (30) eine Hauptbahn (32) zur Führung des Bedienelementes (24) aufweist, und dass ein Umschaltelement (34) zum Umschalten zwischen dem ersten Modus (M1) und dem zweiten Modus (M2) vorgesehen ist.

3. Landwirtschaftliche Arbeitsmaschine nach Anspruch 1, **dadurch gekennzeichnet, dass** die Schaltkulisse (30) eine Hauptbahn (32) und eine mit dieser verbundene Zusatzbahn (36) zur Führung des Bedienelements (24) aufweist, wobei der Hauptbahn (32) und der Zusatzbahn (36) unterschiedliche Modi (M1, M2) zur Einstellung der Geschwindigkeit zugeordnet sind.

4. Landwirtschaftliche Arbeitsmaschine nach einem der vorherigen Ansprüche, **dadurch gekennzeichnet, dass** die Hauptbahn (32) und/oder die Zusatzbahn (36) mindestens einen Bereich für Vorwärtsfahrt (V1, V2, VZ), Rückwärtsfahrt (R1, R2, RZ) sowie einen diese Bereiche verbindenden neutralen Bereich (N) aufweist.

5. Landwirtschaftliche Arbeitsmaschine nach einem der vorherigen Ansprüche, **dadurch gekennzeichnet, dass** ein Umschalten zwischen dem ersten Modus (M1) und dem zweiten Modus (M2) in dem neutralen Bereich (N) durchführbar ist.

6. Landwirtschaftliche Arbeitsmaschine nach einem der vorherigen Ansprüche, **dadurch gekennzeichnet, dass** die Hauptbahn (32) und/oder die Zusatzbahn (36) mindestens einen Bereich (V2, R2) aufweisen in dem eine Boostfunktion aktivierbar ist.

7. Landwirtschaftliche Arbeitsmaschine nach einem der vorherigen Ansprüche, **dadurch gekennzeichnet, dass** das Umschaltelement (34) an dem Bedienelement (24) oder beabstandet zu diesem angeordnet ist.

8. Landwirtschaftliche Arbeitsmaschine nach einem der vorherigen Ansprüche, **dadurch gekennzeichnet, dass** das das Bedienelement (24) einen Anfahrtaster (40) aufweist.

9. Landwirtschaftliche Arbeitsmaschine nach einem der vorherigen Ansprüche, **dadurch gekennzeichnet, dass** eine Tempomatfunktion vorgesehen ist, wobei die Tempomatfunktion in dem ersten und/oder zweiten Modus (M1, M2) aktivierbar und/oder regelbar ist.

10. Verfahren zur Geschwindigkeitsregelung für eine landwirtschaftliche Arbeitsmaschine (10) mit einem Antriebsaggregat (18) und einem auslenkbar angeordneten Bedienelement (24), **dadurch gekennzeichnet, dass** die Geschwindigkeit der landwirtschaftlichen Arbeitsmaschine (10) mittels des Bedienelementes (24) wahlweise schaltbar in einem beschleunigungsproportionalen ersten Modus (M1) und in einem wegproportionalen zweiten Modus (M2) eingestellt wird, wobei in dem beschleunigungsproportionalen ersten Modus (M1) die Größe der Beschleunigung der landwirtschaftlichen Arbeitsmaschine (10) eine Funktion der Auslenkung des Bedienelementes (24) ist und in dem wegproportionalen zweiten Modus (M2) die Größe der Geschwindigkeit der landwirtschaftlichen Arbeitsmaschine (10) eine Funktion der Auslenkung des Bedienelementes (24) ist.

## Claims

1. Agricultural working machine with a drive unit (18) for driving the agricultural working machine (10), and an operating element (24) arranged deflectably in a gear-changing gate (30) for actuating the drive unit (18) and for setting a speed of the agricultural working machine (10), **characterized in that** the speed of the agricultural working machine (10) can be set, selectively switchable by means of the operating element (24), into a first acceleration proportional mode (M1) or into a second displacement proportional mode (M2), wherein, in the first acceleration proportional mode (M1) the magnitude of the acceleration of the agricultural working machine (10) is a function of the deflection of the operating element (24) and in the second displacement proportional mode (M2) the magnitude of the speed of the agricultural working machine (10) is a function of the deflection of the operating element (24).

2. Agricultural working machine according to claim 1, **characterized in that** the gear-changing gate (30) has a main track (32) for guiding the operating element (24), and **in that** a switchover element (34) is provided for switching over between the first mode (M1) and the second mode (M2).

3. Agricultural working machine according to claim 1, **characterized in that** the gear-changing gate (30) has a main track (32) and an additional track (36) connected thereto for guiding the operating element (24), wherein the main track (32) and the additional track (36) are assigned different modes (M1, M2) for setting the speed.

4. Agricultural working machine according to one of the previous claims, **characterized in that** the main track (32) and/or the additional track (36) has at least one area for forward travel (V1, V2, VZ), at least one for reverse travel (R1, R2, RZ) and a neutral area (N) connecting these areas.

5. Agricultural working machine according to one of the previous claims, **characterized in that** switching over between the first mode (M1) and the second mode (M2) can be carried out in the neutral area (N).

6. Agricultural working machine according to one of the previous claims, **characterized in that** the main track (32) and/or the additional track (36) have at least one area (V2, R2) in which a boost function can be activated.

7. Agricultural working machine according to one of the previous claims, **characterized in that** the switchover element (34) is arranged on the operating element (24) or spaced apart therefrom.

8. Agricultural working machine according to one of the previous claims, **characterized in that** the operating element (24) has a start button (40).

9. Agricultural working machine according to one of the previous claims, **characterized in that** a cruise control function is provided, wherein the cruise control function can be activated and/or regulated in the first and/or second mode (M1, M2).

10. Method for regulating the speed of an agricultural working machine (10) with a drive unit (18) and a deflectably arranged operating element (24), **characterized in that** the speed of the agricultural working machine (10) is set, selectively switchable by means of the operating element (24), into a first acceleration proportional mode (M1) and into a second displacement proportional mode (M2) wherein, in the first acceleration proportional mode (M1) the magnitude of the acceleration of the agricultural working machine (10) is a function of the deflection of the operating element (24) and in the second displacement proportional mode (M2) the magnitude of the speed of the agricultural working machine (10) is a function of the deflection of the operating element (24).

## Revendications

1. Engin agricole comprenant un organe d'entraînement (18) pour entraîner l'engin agricole (10) et comprenant un élément de manoeuvre (24) disposé de manière déplaçable dans une coulisse de guidage (30) pour commander l'organe d'entraînement (18) et pour établir une vitesse de l'engin agricole (10), **caractérisé en ce que** la vitesse de l'engin agricole (10) est commutable sélectivement au moyen de l'élément de manoeuvre (24) dans un premier mode proportionnel à une accélération (M1) ou dans un second mode proportionnel à une course (M2), dans le premier mode proportionnel à une accélération (M1) la grandeur de l'accélération de l'engin agricole (10) étant fonction du déplacement de l'élément de manoeuvre (24) et, dans le second mode proportionnel à une course (M2), la grandeur de la vitesse de l'engin agricole (10) étant fonction du déplacement de l'élément de manoeuvre (24) .

2. Engin agricole selon la revendication 1, **caractérisé en ce que** la coulisse de guidage (30) comporte une glissière principale (32) pour guider l'élément de manoeuvre (24), et **en ce qu'**un élément de commutation (34) est prévu pour commuter entre le premier mode (M1) et le second mode (M2).

3. Engin agricole selon la revendication 1, **caractérisé en ce que** la coulisse de guidage (30) comporte une glissière principale (32) et une glissière supplémentaire (36) reliée à celle-ci pour guider l'élément de manoeuvre (24), des modes différents (M1, M2) pour établir la vitesse étant associés à la glissière principale (32) et à la glissière supplémentaire (36).

4. Engin agricole selon une des revendications précédentes, **caractérisé en ce que** la glissière principale (32) et/ou la glissière supplémentaire (36) comportent au moins une zone pour la marche avant (V1, V2, VZ), pour la marche arrière (R1, R2, RZ) ainsi qu'une zone neutre (N) reliant ces zones.

5. Engin agricole selon une des revendications précédentes, **caractérisé en ce qu'**une commutation entre le premier mode (M1) et le second mode (M2) est réalisable dans la zone neutre (N).

6. Engin agricole selon une des revendications précédentes, **caractérisé en ce que** la glissière principale (32) et/ou la glissière supplémentaire (36) comportent au moins une zone (V2, 52) dans laquelle une fonction « boost » est activable.

7. Engin agricole selon une des revendications précédentes, **caractérisé en ce que** l'élément de commutation (34) est disposé sur l'élément de manoeuvre (24) ou à distance de celui-ci.

8. Engin agricole selon une des revendications précédentes, **caractérisé en ce que** l'élément de manoeuvre (24) comporte un bouton de démarrage (40) .

9. Engin agricole selon une des revendications précédentes, **caractérisé en ce qu'**une fonction de régulation de vitesse automatique est prévue, la fonction de régulation de vitesse automatique étant activable et/ou régulable dans le premier et/ou le second mode (M1, M2).

10. Procédé de régulation de vitesse pour un engin agricole (10) comprenant un organe d'entraînement (18) et un élément de manoeuvre (24) disposé de manière déplaçable, **caractérisé en ce que** la vitesse de l'engin agricole (10) est établie de manière commutable sélectivement au moyen de l'élément de manoeuvre (24) dans un premier mode proportionnel à une accélération (M1) et dans un second mode proportionnel à une course (M2), dans le premier mode proportionnel à une accélération (M1) la grandeur de l'accélération de l'engin agricole (10) étant fonction du déplacement de l'élément de manoeuvre (24) et, dans le second mode proportionnel à une course (M2), la grandeur de la vitesse de l'engin agricole (10) étant fonction du déplacement de l'élément de manoeuvre (24) .
